# EUROPÄISCHE PATENTSCHRIFT

(11) **EP 3 286 450 B1**
(45) Veröffentlichungstag und Bekanntmachung des Hinweises auf die Patenterteilung: **29.01.2020**
(21) Anmeldenummer: 16716875.6
(22) Anmeldetag: 18.04.2016
(51) Int. Cl.: F16D 65/09

(54) **STELLEINHEIT**
ACTUATOR
UNITÉ DE RÉGLAGE

(30) Priorität: 20.04.2015 DE 102015207099
(43) Veröffentlichungstag der Anmeldung: 28.02.2018
(73) Patentinhaber: SAF-HOLLAND GmbH, 63856 Bessenbach (DE)
(72) Erfinder: DREWES, Olaf, 63743 Aschaffenburg (DE); MARSCHNER, Oliver, 63808 Haibach (DE)
(74) Vertreter: Müller Schupfner & Partner Patent- und Rechtsanwaltspartnerschaft mbB
(86) Internationale Anmeldenummer: PCT/EP2016/058503
(87) Internationale Veröffentlichungsnummer: WO 2016/169875

(56) Entgegenhaltungen:
- DE-A1- 2 818 682
- US-A- 4 157 747

## Beschreibung

Die vorliegende Erfindung betrifft eine Stelleinheit zum Einsatz in Bremssystemen, insbesondere für Nutzfahrzeuge und ein Verfahren zur Demontage eines Bremssystems.

Stelleinheiten sind im Bereich der Bremssysteme für Nutzfahrzeuge bekannt, so hat es sich als vorteilhaft herausgestellt, Nachstell- und Rückstelleinrichtungen in den Bremsbetätigungsanlagen von Nutzfahrzeugen zu verwenden, welche den Verschleiß der Bremsbacken oder der Bremsbeläge ausgleichen und welche durch ihre Rückstellfunktion bei der Erneuerung der Bremsbeläge wieder in ihre ursprüngliche Ausgangslage zurückgestellt werden können. Bei den aus dem Stand der Technik bekannten Stelleinheiten ist es bisher erforderlich, zur Demontage der Bremsbacken die mitunter sehr komplizierte und schwer erreichbare Rückstellmechanik zu nutzen, um ein ausreichendes Spiel einstellen zu können, mit welchem die Bremsbacken oder die Bremsbeläge aus der Bremsendlage entnommen werden können. Insbesondere bei den bekannten mechanischen Nachstelleinrichtungen sind die Stellschrauben der Stelleinheit oft sehr schwer zu erreichen und es ist daher für einen Anwender schwierig und zeitaufwendig, Bremsbacken und Bremsbeläge aus Bremseinheiten zu demontieren.

Die Dokumente GB 605,939 A und GB 179 533 A betreffen Bremsanlagen mit Stelleinheiten, bei welchen Abstandselemente dafür vorgesehen sind, durch Verdrehen einer exzentrischen Geometrie den Verschleiß am Backenelement auszugleichen.

Die DE 28 18 682 A und die US 4,157,747 A betreffen schwenkbare Lagerungen für Bremsbacken von Trommelbremsen.

Aufgabe der vorliegenden Erfindung ist es, eine Stelleinheit anzugeben, mit welcher eine besonders einfache, zeitsparende und mit wenigen Arbeitsschritten verbundene Demontage von Bremsbelägen oder Bremsbacken aus einem Bremssystem ermöglicht wird.

Diese Aufgabe wird gelöst mit einer Stelleinheit gemäß Anspruch 1 und einem Verfahren nach Anspruch 14. Weitere Vorteile und Merkmale der vorliegenden Erfindung ergeben sich aus den abhängigen Ansprüchen.

Erfindungsgemäß umfasst die Stelleinheit ein Abstandselement, welches an einer Backeneinheit oder an einer Stützeinheit festlegbar ist, wobei das Abstandselement einen Halteabschnitt aufweist, über welchen es gegen Verlagerung entlang einer Betätigungsachse relativ zu der Einheiten Backeneinheit oder der Stützeinheit sicherbar ist, wobei das Abstandselement einen ersten Eingriffsabschnitt aufweist, welcher sich in einer ersten Stellung des Abstandselements an der jeweils anderen der Backeneinheit oder Stützeinheit abstützt, wobei das Abstandselement in eine zweite Stellung bringbar ist, in der der erste Eingriffsabstand außer Eingriff mit der Backeneinheit und der Stützeinheit steht, wobei das Abstandelement in der ersten Stellung die Backeneinheit und die Stützeinheit weiter voneinander beabstandet als in der zweiten Stellung. Die Stelleinheit ist vorzugsweise eine Unterbaugruppe einer Trommelbremse eines Nutzfahrzeuges oder vorzugsweise einer Scheibenbremse eines Nutzfahrzeuges. Dabei ist ein Abstandselement mit Vorteil im Kraftübertragungsbereich bzw. im Abstützungsbereich zwischen einer Backeneinheit und einer Stützeinheit angeordnet und an einer der Einheiten festgelegt. Die Backeneinheit ist vorteilhafterweise die Bremsbacke einer Trommelbremse. Die Stützeinheit ist bevorzugt ein Bauteil oder eine Baueinheit, welche die Betätigungskraft zur Betätigung der Backeneinheit aufbringt oder von einer weiteren Baugruppe der Bremsanlage aufnimmt und an die Backeneinheit überträgt. Besonders bevorzugt ist die Stützeinheit ein Kolben einer Spreizkeileinheit. Alternativ bevorzugt kann die Stützeinheit ein Rollen- oder Wälzkörper sein, welcher die Betätigungskraft von einer hydraulischen Bremsanlage oder einer Spreizkeileinheit aufnimmt und an die Backeneinheit weiterleitet. Es ist im Rahmen der vorliegenden Erfindung von Vorteil, das Abstandselement an der Stützeinheit, welche gleichzeitig auch die Betätigungseinheit ist, oder unmittelbar mit der Betätigungseinheit in Eingriff steht, angreifen zu lassen, da auf diese Weise die für die Einstellung und Betätigung der Bremse erforderlichen Systeme zusammengefasst sind. Durch die Zusammenfassung der entsprechenden Baugruppen kann ein Anwender sehr leicht die Montage, Demontage, Einstellung und Überwachung der Funktion der Bremse und der Stelleinheit vornehmen. Das Abstandselement ist dabei vorzugsweise zumindest in seiner ersten Stellung derart angeordnet, dass es die von der Stützeinheit aufgebrachte Kraft an die Backeneinheit überträgt und gleichzeitig die Backeneinheit von der Stützeinheit beabstandet. Mit Vorteil ist das Abstandselement dabei von der ersten Stellung mit nur wenigen oder besonders bevorzugt einem einzigen Handgriff durch einen Anwender in eine zweite Stellung bringbar, in der der erste Eingriffsabschnitt der des Abstandselements nicht im Eingriff mit der Backeneinheit und der Stützeinheit steht und somit auch nicht die Backeneinheit von der Stützeinheit beabstandet. Mit Vorteil verringert sich durch das Verstellen des Abstandelements von der ersten Stellung in die zweite Stellung der Abstand zwischen der Backeneinheit und der Stützeinheit. Auf diese Weise wird durch einfaches Verlagern oder Verdrehen des Abstandselements auf einfache Weise ein Freiraum zwischen der Backeneinheit und der entsprechend korrespondierenden Bremstrommel oder Bremsschreibe einer Bremsanlage vergrößert, so dass ein ausreichendes Spiel für eine Demontage der Bremsbeläge, der Bremsbacke oder der entsprechend korrespondierenden Bauteile der Backeneinheit möglich ist.

Vorzugsweise ist das Abstandselement durch Verdrehen um eine Stellachse und/oder erfindungsgemäß durch Verlagerung längs der Stellachse von der ersten Stellung in die zweite Stellung und von der zweiten Stellung zurück in die erste Stellung bringbar. Mit anderen Worten ist das Abstandselement somit vorzugsweise gegen die Verdrehrichtungen und Verlagerungsrichtungen, welche nicht dazu dienen, das Abstandselement von der ersten Stellung in die zweite Stellung und umgekehrt zu bringen, gesichert. In der zweiten Stellung steht vorzugsweise ein zweiter Eingriffsabschnitt mit der jeweiligen korrespondierenden Geometrie, welche in der ersten Stellung mit dem ersten Eingriffsabschnitt in Eingriff stand, in Eingriff. Besonders bevorzugt ist das Abstandselement dabei durch eine Verdrehung oder durch eine einfache transversale Verlagerung von der ersten Stellung in die zweite Stellung und umgekehrt bringbar, so dass durch einen Anwender der Stelleinheit nur eine möglichst geringe Bewegung des Abstandselements erforderlich ist, um den entsprechenden erforderlichen Freiraum zur Demontage der Backeneinheit zu schaffen. Bevorzugt ist die erste Achse derart ausgerichtet, dass es für einen Anwender besonders leicht möglich ist, in dem noch zusammengebauten Bremssystem das Abstandselement von der ersten Stellung in die zweite Stellung zu bringen. Im Fall, dass das Abstandselement durch transversale Verlagerung längs der Stellachse von der ersten Stellung in die zweite Stellung bringbar ist, ist somit vorzugsweise die Stellachse derart im Bremssystem angeordnet, dass sie zum Anwender hinzeigt, wobei der Anwender durch einfaches Ziehen oder Drücken des Abstandselements zu ihm hin oder von ihm weg das Abstandselement in die zweite Stellung bringen kann.

Vorzugsweise weist der erste Eingriffsabschnitt eine größere mittlere Erstreckung längs oder parallel der Betätigungsachse auf, als eine mittlere Erstreckung eines zweiten Eingriffsabschnitts des Abstandselements längs oder parallel zu der Betätigungsachse. Die Betätigungsachse ist dabei vorzugsweise die Achse, entlang derer die Kraft von der Stützeinheit auf die Backeneinheit übertragen wird. Gleichzeitig ist die Betätigungsachse vorzugsweise die Achse entlang derer sich der Abstand zwischen der Stützeinheit und der Backeneinheit bemisst. Das Abstandselement weist dabei vorzugsweise im ersten Eingriffsabschnitt eine größere Erstreckung auf als im zweiten Eingriffsabschnitt, um in der ersten Stellung einen größeren Abstand zwischen der Backeneinheit und der Stützeinheit herstellen zu können, als bei Eingriff des zweiten Eingriffsabschnitts in der zweiten Stellung des Abstandselements. Als mittlere Erstreckung wird im vorliegenden Fall vorzugsweise der Mittelwert der Erstreckung längs oder parallel der Betätigungsachse des jeweiligen Eingriffsabschnitts definiert, welcher insbesondere bei gerundeten oder elliptisch geformten Querschnittsgeometrien der Eingriffsabschnitte relevant ist. Hier ist es möglich, dass im Betrieb der Bremsanlage der erste Eingriffsabschnitt oder der zweite Eingriffsabschnitt, je nach Stellung der Stützeinheit und der Backeinheit zueinander, mit geringfügig verschiedenen Abschnitten eine Kraft jeweils auf die Backeneinheit oder die Stützeinheit übertragen. Gerundete Geometrien im Bereich der Eingriffsabschnitte sowie der korrespondierenden Kontaktgeometrien der Backeneinheit und der Stützeinheit sind dabei besonders bevorzugt, da Kerbwirkung und Verkanten, sowie lokal auftretende Hertz'sche Flächenpressung durch zu geringe kraftübertragende Querschnittsflächen vermieden werden können.

Erfindungsgemäß stützt sich der zweite Eingriffsabschnitt des Abstandselements in der zweiten Stellung an der Backeneinheit oder der Stützeinheit ab. Das Abstandselement ist an einer der Einheiten Backeneinheit oder Stützeinheit festgelegt. In der zweiten Stellung stützt sich dabei vorzugsweise ein zweiter Eingriffsabschnitt an jener der beiden Einheiten ab, an welcher das Abstandselement nicht festgelegt ist. Nicht erfindugsgemäß könnte als Alternative hierzu das Abstandselement keinen zweiten Eingriffsabschnitt aufweisen, wobei bei der zweiten Stellung des Abstandselements die Backeneinheit und die Stützeinheit unmittelbar aneinander anliegen und kein Eingriffsabschnitt des Abstandelements unmittelbar eine Kraft von der Stützeinheit auf die Backeneinheit überträgt. Gleichwohl ist auch in diesem Fall in der zweiten Stellung das Abstandselement an einer der beiden Einheiten Backeneinheit oder Stützeinheit festgelegt.

Ferner bevorzugt ist ein Sicherungsabschnitt vorgesehen, der das Abstandselement in der ersten Stellung gegen Verdrehung um die Stellachse und/oder gegen Verlagerung längs der Stellachse relativ zur Stützeinheit oder zur Backeneinheit sichert. In einer ersten bevorzugten Ausführungsform kann der Sicherungsabschnitt an einem separaten Element angeordnet sein und derart in entsprechenden Eingriff mit dem Abstandelement und vorzugsweise einer oder beider der Einheiten Backeneinheit oder Stützeinheit in Eingriff gebracht werden, dass er das Abstandselement in der ersten Stellung sichert. Insbesondere sichert der Sicherungsabschnitt dabei das Abstandselement gegen die entsprechende Verlagerungsbewegung oder Verdrehbewegung, welche das Abstandselement in die zweite Stellung bringen würde. Ist also ein Verdrehen um die Stellachse erforderlich, um das Abstandselement von der ersten Stellung in die zweite Stellung zu bringen, so sichert der Sicherungsabschnitt das Abstandselement genau gegen diese Verdrehung. In weiteren alternativ bevorzugten Ausführungsformen kann der Sicherungsabschnitt an einem als Sicherungsbolzen ausgeführten Sicherungselement angeordnet sein, wobei der Sicherungsbolzen in einer Aussparung des Abstandselements und/oder einer beiden Einheiten Backeneinheit oder Stützeinheit in Eingriff bringbar ist.

Mit Vorteil bewirkt oder ermöglicht ein Verlagern des Abstandselements von der ersten Stellung in die zweite Stellung eine Änderung des Abstandes der Backeneinheit von der Stützeinheit längs der Betätigungsachse. Der Abstand zwischen der Backeneinheit und der Stützeinheit wird dabei vorzugsweise in dem Bereich der Berührung zwischen der Backeneinheit oder der Stützeinheit mit dem jeweiligen Abschnitt gemessen, welcher mit dem ersten Eingriffsabschnitt des Abstandselements in Eingriff bringbar ist. Mit anderen Worten ist also, wenn beispielsweise die Stützeinheit sich in der ersten Stellung am ersten Eingriffsabschnitt des Abstandselements abstützt der Abstand zwischen der Stützeinheit und der Backeneinheit vorzugsweise der Abstand der entsprechend korrespondierenden Fläche der Stützeinheit, welche mit dem ersten Eingriffsabschnitt in Eingriff gelangt von einer entsprechend korrespondierenden Referenzgeometrie an der Backeneinheit längs oder parallel zur Betätigungsachse. Da die Änderung des Abstandes längs oder parallel zur Betätigungsachse erfolgt, hat somit das Verlagern des Abstandselements von der ersten Stellung in die zweite Stellung genau denselben Effekt wie das viel aufwendigere Zurückstellen der Betätigungseinheit durch Verdrehen eines Gewindes oder eines Motors einer Nachstelleinrichtung einer Bremse. Auf diese Weise kann das Abstandselement dazu genutzt werden, einen Teil der Rückstellung durch eine Nachstelleinheit des Bremssystems zu übernehmen.

Besonders bevorzugt liegt die Änderung des Abstandes im Bereich von 1 mm bis 2 cm vorzugsweise von 2 mm bis 1 cm und besonders bevorzugt bei circa 4 mm bis 6 mm. Der größte der bevorzugten Bereiche für den Abstand von 1 mm bis 2 cm umfasst dabei sämtliche im Rahmen der vorliegenden Erfindung getesteten Bremssysteme. Bei einer Änderung des Abstandes von weniger als 1 mm ist der Vorteil der Erfindung, dass Backeneinheiten mit wenigen Handgriffen vom Bremssystem demontiert werden können, nicht uneingeschränkt gewährleistet. Bei einer Änderung des Abstandes von mehr als 2 cm ist die vom Anwender aufzubringende Kraft, um diese Abstandsänderung durch Verlagerung des Abstandselements auch an die Backeneinheiten zu übertragen, sehr groß und kann nicht uneingeschränkt und ohne zusätzliches Werkzeug von allen Anwendern durchgeführt werden. Der bevorzugte Bereich von 2 mm bis 1 cm hat sich besonders für Trommelbremsen von Nutzfahrzeugen bewährt, da die Untergrenze von 2 mm und die Obergrenze von 1 cm besonders für diese Bremssysteme eine besonders einfache Demontierbarkeit bei nur mäßigen und für einen Anwender leicht zu bewältigenden Kräften ermöglicht. Insbesondere bevorzugt ist der Bereich von 4 mm bis 6 mm, bei welchem vorzugsweise sämtliche der im Rahmen dieser Erfindung vorgeschlagenen Ausführungsformen gleichermaßen leicht von der ersten Stellung in die zweite Stellung und umgekehrt verlagerbar sind und gleichzeitig ausreichende Montagefreiheit bzw. ausreichendes Spiel der Backeneinheiten erreicht werden kann. Dieses besonders bevorzugte Bereich von 4 mm bis 6 mm stellt den besten Kompromiss zwischen ausreichendem Spiel zur Demontage und geringen Kräften, die vom Anwender aufgebracht werden müssen, dar.

Besonders bevorzugt weist das Abstandselement einen dritten Eingriffsabschnitt auf, welcher mit dem Sicherungsabschnitt in formschlüssigen Eingriff bringbar ist. Der dritte Eingriffsabschnitt des Abstandselements ist vorzugsweise als Bohrung oder Nut ausgebildet, wobei in die entsprechende Nut ein an einem Sicherungsring oder Sprengring vorgesehener Sicherungsabschnitt eingreifen kann, während ein als Bohrung ausgebildeter Eingriffsabschnitt für den Eingriff eines an einem Bolzen oder Sicherungsstift ausgeführten Sicherungsabschnitts ausgelegt ist. Mit Vorteil ist der dritte Eingriffsabschnitt am Abstandselement derart ausgebildet, dass ein im Handel erhältlicher Körper, wie beispielsweise ein Sprengring, mit dem Sicherungsabschnitt ausgebildet sein kann, um das Abstandselement gegen Verlagerung zu schützen und in der ersten Stellung zu halten. Die Kosten für eine Stelleinheit im Rahmen der vorliegenden Erfindung können somit deutlich reduziert werden.

Darüber hinaus bevorzugt ist der Sicherungsabschnitt an einem Klammerelement ausgebildet, welches in formschlüssigen Eingriff mit der Backeneinheit gebracht, das Abstandelement gegen Verdrehung um die Stellachse sichert. Das Klammerelement kann vorzugsweise als U-förmiger Körper ausgebildet sein, welcher zum einen Eingriffsflächen zum formschlüssigen Eingriff mit dem Abstandelement und zum anderen auch bevorzugt Eingriffsflächen zum formschlüssigen Eingriff mit einer entsprechend korrespondierenden Geometrie der Backeneinheit aufweist, um besonders bevorzugt das Abstandselement gegen Verdrehung um die Stellachse relativ zur Backeneinheit zu sichern. Insbesondere bevorzugt kann an dem Klammerelement eine Hinterschneidungsgeometrie vorgesehen sein, welche durch einen Anwender unter Aufbringen einer händisch erzeugbaren Kraft überwunden werden kann, um das Klammerelement mit dem Sicherungsabschnitt in die entsprechende Sicherungsposition "einclipsen" zu können und auch ohne weiteres Werkzeug wieder aus dieser Position entnehmen zu können.

Alternativ bevorzugt kann der Sicherungsabschnitt an dem Abstandselement festgelegt oder vorzugsweise einstückig mit dem Abstandselement ausgebildet sein und bezogen auf die Stellachse eine von der Rotationsgeometrie abweichende Geometrie aufweisen, wobei der Sicherungsabschnitt durch Verlagerung längs der Stellachse in eine Position bringbar ist, in der er in einem korrespondierenden Abschnitt an der Backeneinheit eingreift und das Abstandselement gegen Verdrehung um die Stellachse sichert. Alternativ oder zusätzlich zu einem Sicherungsabschnitt der an einem separaten Element ausgeführt ist, kann der Sicherungsabschnitt auch als entsprechend von der Rotationsgeometrie abweichende Geometrie am Abstandselement ausgebildet sein. In Frage kommt hier beispielweise ein einfach herzustellender Außenvierkant, welcher mit einem entsprechenden als Innenvierkantbohrung ausgebildeten Abschnitt der Backeneinheit in Eingriff bringbar ist, wobei das Abstandelement gegen Verdrehung um die Stellachse relativ zur Backeneinheit gesichert ist. Es versteht sich, dass alternativ zu der Festlegung des Abstandselements an der Backeneinheit auch eine Sicherung des Abstandselements an der Stützeinheit durch einen entsprechend ausgebildeten Sicherungsabschnitt möglich ist.

In einer nicht erfindungsgemäßen Ausführungsform bringt ein Verdrehen des Abstandselements um einen Winkel das Abstandselement von der ersten Stellung in die zweite Stellung oder umgekehrt, wobei der Winkel kleiner als 360° ist, vorzugsweise ≤ 180° ist und besonders bevorzugt ≤ 90° ist. Besonders bevorzugt ist das Abstandselement durch wenige Handgriffe von der ersten Stellung in die zweite Stellung bringbar, wobei insbesondere ein aufwendiges und mehrere Umdrehung erforderndes Schrauben des Abstandselements vermieden werden soll. Entsprechend ist ein bevorzugtes Merkmal des Abstandselements, dass es durch Verdrehung um einen Winkel < 360° von der ersten Stellung in die zweite Stellung bringbar ist. Dies ist ein deutlicher Unterschied zu den bisher aus dem Stand der Technik bekannten Möglichkeiten, ein entsprechendes Montage- und Demontagespiel für eine Backeneinheit herzustellen. Dort werden die Nachstell- oder Rückstelleinheit und anhand des vorhandenen Gewindes zurückgestellt, bzw. zurückgeschraubt, wobei Verdrehwinkel von oft deutlich mehr als 720° erforderlich sind, um ein ausreichendes Spiel herstellen zu können. Besonders bevorzugt ist der erforderliche Winkel, um den Abstandselement verdreht werden muss, um von der ersten Stellung in die zweite Stellung gebracht zu werden kleiner als oder ca. 180°, was für einen Anwender mit einem einzigen Umgreifen möglich ist. Der Winkel von 180° kann gegenüber dem Winkel von 90° jedoch Vorteile aufweisen, da ein allmählicher Übergang zwischen der ersten Stellung und der zweiten Stellung und umgekehrt erreichbar ist, in dem beispielsweise Anfasungen und über einen längeren Winkelbereich vorgesehene Anschrägungen vorhanden sind. Dies erleichtert das Verlagern des Abstandselements von der zweiten Stellung zurück in die erste Stellung, bei welcher die auf die Backeneinheiten üblicherweise wirkenden Kräfte überwunden werden müssen. Besonders bevorzugt ist der Winkel kleiner oder gleich 90°, wobei der Anwender mittels eines einfachen Hebelelements, welches beispielsweise an dem Abstandselement anbringbar ist, und es erleichtert die erforderliche Kraft aufzubringen, mit einer nur sehr geringen Verdrehung des Abstandselements ein ausreichendes Montagespiel zur Demontage der Bremsbacken herstellen kann.

In einer nicht erfindungsgemäßen Ausführungsform ist der erste Eingriffsabschnitt als rechteckiger Vorsprung ausgebildet, dessen lange Kante eine größere Erstreckung aufweist als der Abstand zweier Backenstege der Backeneinheit, wobei die kurze Kante des ersten Eingriffsabschnitts eine kleinere Erstreckung aufweist, als der Abstand der Backenstege voneinander. Auf diese Weise kann das Abstandselement in der ersten Stellung derart angeordnet werden, dass sich die lange Kante im Wesentlichen senkrecht zu den Backenstegen erstreckt, wobei beide Backenstege vorzugsweise auf dem ersten Eingriffsabstand zu liegen kommen. Wird das Abstandselement in die zweite Stellung gebracht, so wird es vorzugsweise um 90° gedreht, derart, dass sich nun die kurze Kante des ersten Eingriffsabschnitts zwischen den Backenstegen befindet und der erste Eingriffsabschnitt somit nicht in Eingriff mit den Backenstegen steht. Wird das Abstandselement in die zweite Stellung gebracht, so wird es vorzugsweise um 90° gedreht, derart, dass sich nun die kurze Kante des ersten Eingriffsabschnitts zwischen den Backenstegen befindet und der erste Eingriffsabschnitt somit nicht in Eingriff mit den Backenstegen steht. Mit anderen Worten rutscht beim Verdrehen des Abstandselements von der ersten Stellung in die zweite Stellung der erste Eingriffsabschnitt zwischen die Backenstege, wobei die Backenstege in der zweiten Stellung entweder an einem zweiten Eingriffsabschnitt des Abstandselements zur Auflage kommen oder direkt auf der Stützeinheit. In diesem bevorzugten Fall ist somit eine Verdrehung des Abstandselements um 90° ausreichend, um das entsprechende Spiel für eine Demontage der Backeneinheit zu erreichen.

In einer nicht erfindungsgemäßen Ausführungsform bevorzugt ist das Abstandselement an einem Betätigungskolben der Stützeinheit festgelegt, wobei die Betätigungsachse parallel zur Stellachse verläuft. Mit Vorteil ist das Abstandselement dabei vorzugsweise einstückig mit dem Betätigungskolben ausgeführt, wobei um das Abstandselement von der ersten Stellung die zweite Stellung zu bringen, lediglich der Betätigungskolben um einen Winkel von vorzugsweise weniger als 180° verdreht werden muss. Durch die Integration des Abstandselements an dem Betätigungskolben ist es auf besonders einfache Weise möglich, die Stelleinheit der vorliegenden Erfindung in bereits existierende Bremssysteme zu integrieren, in dem einfach an die dort vorgesehen Betätigungskolben eine entsprechende als Abstandselement ausgebildete Geometrie angefügt wird. Alternativ bevorzugt kann das Abstandselement auch an dem Betätigungskolben über eine entsprechende, formschlüssig eingreifende Geometrie festgelegt sein. Auch auf diese Weise ist es besonders einfach möglich, das Abstandselement nachträglich in bereits existierende Bremssysteme nachzurüsten. Als Alternative könnte das Abstandselement auch an der der Betätigungseinheit der Bremse gegenüberliegenden Eingriffsgeometrie einer Bremsbacke wie beispielsweise an der gegenüberliegenden Seite der Bremse vorgesehene Kugelpfanne zur Lagerung der Bremsbacke angeordnet sein. In einer bevorzugten Ausführungsform kann sowohl an der Betätigungseinheit als auch an der Kugelpfanne einer Trommelbremse eine Stelleinheit mit einem Abstandselement angeordnet sein.

Vorzugsweise umfasst die Stützeinheit einen zylinder- oder tonnenförmig ausgebildeten Rollenkörper, welcher sich mit seiner Mantelfläche an einer Spreizkeileinheit der Stützeinheit abstützt, wobei das Abstandselement bereichsweise bolzenförmig ausgebildet ist und in der ersten Stellung mit seinem ersten Eingriffsabschnitt und in der zweiten Stellung mit seinem zweiten Eingriffsabschnitt an der Backeneinheit eingreift, wobei sich der Halteabschnitt des Abstandselements in einer Aussparung der Stützeinheit, insbesondere in einer Aussparung am Rollenkörper der Stützeinheit, abstützt. Besonders bevorzugt weist das Abstandselement dabei Abschnitte verschiedenen Durchmessers auf, wobei in der ersten Stellung des Abstandelements jeweils die Abschnitte mit dem größeren Durchmesser als erster Eingriffsabschnitte mit einer entsprechenden Haltegeometrie an der Backeneinheit in Eingriff stehen. In der zweiten Stellung des Abstandselements greifen vorzugsweise die zweiten Eingriffsabschnitte des Abstandselements, welche einen kleineren Durchmesser aufweisen als die ersten Eingriffsabschnitte, an der Backeneinheit ein. Indem das Abstandselement als einfacher Bolzen mit verschiedenen Eingriffsabschnitten verschiedener Durchmesser ausgeführt ist, kann ein Anwender auf besonders einfache Weise das Abstandselement entlang der Stellachse verlagern und so auf besonders einfache Weise das Abstandselement von der ersten Stellung in die zweite Stellung und umgekehrt bringen. In der ersten Stellung kann das Abstandselement dabei durch einen einfachen Sprengring wie zuvor beschrieben gegen Verlagerung längs der Stellachse gesichert werden.

Mit Vorteil kann das Abstandselement durch Verlagern längs der Stellachse von der ersten Stellung in die zweite Stellung und entgegengesetzt gebracht werden. In diesem bevorzugten Fall ist eine Verlagerung des Abstandselements längs der Stellachse für einen Anwender sehr einfach auszuführen, da diese seitlich bezogen auf die Raddrehachse des am Bremssystem festgelegten Rades erfolgen kann. Somit ist das Abstandselement bei Demontage des Bremssystems von außen besonders gut zu erreichen und auch die Verlagerungsbewegung längs der Stellachse ist für einen Anwender besonders einfach durchzuführen. Im Vergleich zu einem Verdrehen des Abstandselements um die Stellachse muss der Anwender bei einer Verlagerung des Abstandselements kein Drehmoment aufbringen, sondern kann beispielsweise durch Einsatz eines Hammers auch bei einem festgeklemmten Abstandselement ohne Weiteres die zweite Stellung des Abstandselements erreichen. Insbesondere bei hochbeanspruchten Bremssystemen in Nutzfahrzeugen oder landwirtschaftliche genutzten Nutzfahrzeugen ist somit die Ausbildung des Abstandselements derart, dass es durch Verlagerung längs oder parallel zu der Stellachse zu der ersten Stellung in die zweite Stellung bringbar ist, eine robustere Ausführung der Stelleinheit, da bei Festsitzen des Abstandselement durch Dreck, Rost oder ähnlichen für derartige Nutzfahrzeuge typischen Zuständen, trotzdem das erforderliche Spiel zur Demontage der Backeneinheit herstellbar ist.

In einer nicht erfindungsgemäßen Ausführungsform ist das Abstandselement durch Verdrehen um die Stellachse von der ersten Stellung in die zweite Stellung und entgegengesetzt bringbar. Die Verdrehung des Abstandselements kann dabei insbesondere bevorzugt durch Vorsehen einer Außensechskantgeometrie am Abstandselement erleichtert werden, welche beispielweise mit einem Maulschlüssel in Eingriff bringbar ist, wodurch es dem Anwender besonders leicht gemacht wird, das erforderliche Drehmoment zur Verlagerung des Abstandselements von der ersten in die zweite Stellung und umgekehrt aufzubringen. Der Vorteil bei dieser Ausführungsform ist, dass insbesondere das Zurückverlagern des Abstandselements von der zweiten zurück in die erste Stellung genauso einfach möglich ist wie das Verlagern des Abstandselements von der ersten in die zweite Stellung.

Besonders bevorzugt weist das Abstandselement eine Anfasung auf, welche zwischen dem ersten Eingriffsabschnitt und dem zweiten Eingriffsabschnitt angeordnet ist. Durch die Anfasung zwischen dem ersten Eingriffsabschnitt wird insbesondere der Übergang des Abstandselements zwischen der ersten Stellung und der zweiten Stellung erleichtert. Die Anfasung erlaubt es dabei, dass keine separate Kraft an der Backeneinheit oder der Stützeinheit eingesetzt werden muss, um diese in eine Position zueinander zu bringen, in der das Abstandselement zurück in die erste Stellung bringbar ist. Insbesondere bevorzugt sind dabei die schrägen Geometrien derart ausgelegt, dass unter Überwindung einer bestimmten, vorzugsweise noch händisch aufbringbaren Kraft, das Abstandselement die Backeneinheit und die Stützeinheit derart voneinander beabstandet, dass keine weitere Kraft erforderlich ist, um die Stelleinheit von der zweiten Stellung zurück in die erste Stellung zu bringen.

In einem besonders vorteilhaften Verfahren kann im Rahmen der vorliegenden Erfindung ein Bremssystem demontiert werden. Das Verfahren umfasst dabei die Schritte: Lösen eines Sicherungsabschnitts aus seinem Eingriff mit einem Abstandselement, Verdrehen und/oder Verlagern des Abstandselements um und/oder entlang einer Stellachse derart, dass das Abstandselement von einer ersten Stellung in eine zweite Stellung gelangt, Ausnutzen des an einer Backeneinheit entstandenen Spiels um die Backeneinheit zu demontieren. Die Durchführbarkeit des Verfahrens zur Demontage der Backeneinheit von dem Bremssystem wird dabei insbesondere durch die Beschaffenheit des Abstandselements erlaubt. Bevorzugt ermöglicht das Abstandselement mit einer einzigen Drehung und/oder Verlagerung des Abstandselements eine besonders Schnelle Demontage der Bremsbacken. Vorzugsweise wird das Abstandselement im Rahmen der vorliegenden Erfindung nur um einen Winkel kleiner gleich 180° gedreht um von der ersten Stellung in die zweite Stellung zu gelangen. Es versteht sich, dass die zuvor beschriebenen Merkmale der Stelleinheit auch Merkmale des Verfahrens zur Demontage eines Bremssystems bilden können, sofern sie dessen Durchführbarkeit direkt beeinflussen und mit Vorteil begünstigen.

Weitere Vorteile und Merkmale der vorliegenden Erfindung ergeben sich aus der nachfolgenden Beschreibung bevorzugter Ausführungsformen mit Bezug auf die beigefügten Figuren. Es versteht sich, dass einzelne Merkmale der in den einzelnen Ausführungsbeispielen erklärten bevorzugten Ausführungsformen auch in Ausführungsformen anderer Beispiele und anderer Figuren anwendbar sind, sofern dies nicht explizit ausgeschlossen wurde oder sich aufgrund technischer Gegebenheiten verbietet. Es zeigen:
- Fig. 1: Ansichten einer ersten bevorzugten Ausführungsform der erfindungsgemäßen Stelleinheit
- Fig.2a, b, c: Ansichten dreier bevorzugter Ausführungsformen eines Abstandselements
- Fig. 3: zwei Ansichten einer weiteren bevorzugten Ausführungsform der erfindungsgemäßen Stelleinheit
- Fig. 4a, b: zwei Ansichten einer Stelleinheit, und
- Fig. 5a, b: zwei Ansichten einer Stelleinheit

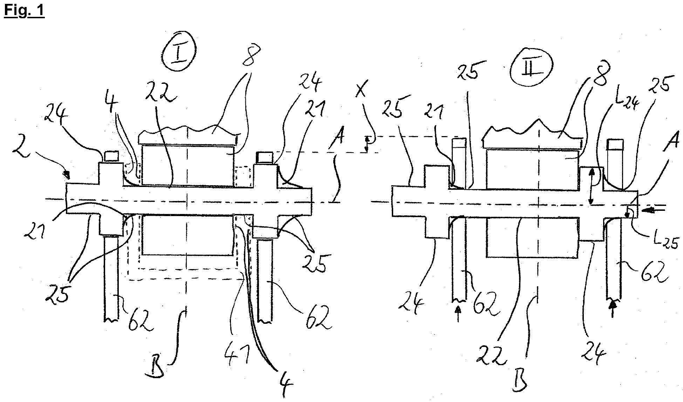

Fig. 1 zeigt zwei Ansichten einer Ausführungsform der erfindungsgemäßen Stelleinheit, wobei der mit I gekennzeichnete linke Teil von Fig. 1 die Stelleinheit in dem Zustand zeigt, in dem sich das Abstandselement 2 in seiner ersten Stellung I befindet. Die rechts gezeigte, mit II gekennzeichnete Ansicht zeigt das Abstandselement 2 in seiner zweiten Stellung II. Das Abstandselement 2 weist einen ersten Eingriffsabschnitt 24 und einen zweiten Eingriffsabschnitt 25 auf. Wie in der bevorzugten Ausführungsform dargestellt, weist das Abstandselement 2 vorzugsweise zwei erste Eingriffsabschnitte 24 und vier zweite Eingriffsabschnitte 25 auf. Weiterhin bevorzugt weist das Abstandselement 2 einen Halteabschnitt 22 auf, welcher in der vorliegenden Ausführungsform vorzugsweise den gleichen Durchmesser ausweist wie die zweiten Eingriffsabschnitte 25. Die Backeneinheit 6 umfasst vorzugsweise zwei Backenstege 62, welche mit Aussparungen versehen sind, die jeweils mit dem ersten Eingriffsabschnitt 24 oder mit einem zweiten Eingriffsabschnitt 25 des Abstandselements 2 in Eingriff bringbar sind. In der ersten Stellung I steht die Backeneinheit 6, bzw. die Backenstege 62 mit den ersten Eingriffsabschnitten 24 in Eingriff. Mit gestrichelter Linie ist ein bevorzugtes Klammerelement 41 dargestellt, welches Sicherungsabschnitte 4 aufweist, die das Abstandselement 2 in der ersten Stellung I sichern. Nachdem das Klammerelement 41 gelöst wird, kann das Abstandselement 2 längs der Stellachse A verschoben werden, derart, dass die ersten Eingriffsabschnitte 24 außer Eingriff mit der Backeneinheit 6 gelangen. Schließlich kann das Abstandselement 2 in seine zweite Stellung II, gebracht werden, wobei in der zweiten Stellung die Backeneinheit 6, bzw. die Backenstege 62 mit den zweiten Eingriffsabschnitten 25 des Abstandselements in Eingriff stehen. Die zweiten Eingriffsabschnitte 25 weisen eine geringere Erstreckung L₂₅ quer zur Stellachse bzw. längs einer Betätigungsachse B auf als die ersten Eingriffsabschnitte 24. Dieser Unterschied der Erstreckung L₂₄ der ersten Eingriffsabschnitte zu der Erstreckung L₂₅ der zweiten Eingriffsabschnitte 25 definiert somit die Abstandsänderung x um welche die Backeneinheit 6 näher an die Stützeinheit 8 herankommt, bzw. sich längs oder parallel zur Betätigungsachse B in Richtung der Stützeinheit 8 verlagert. Vorzugsweise entsteht bei der in Fig. 1 gezeigten Ausführungsform ein nicht gezeigtes Spiel an der Unterseite der Backeneinheit 6 in der zweiten Stellung II des Abstandselements 2. Es versteht sich, dass das Abstandselement ausgehend von der ersten Stellung I auch nach rechts verlagert werden könnte um in die zweite Stellung II gebracht zu werden. Dies erlaubt insbesondere, dass eine Stelleinheit nach der in Fig. I gezeigten Ausführungsform sowohl an rechten als auch linken Bremssystemen am Fahrwerk eines Nutzfahrzeuges verwendet werden kann, ohne dass bauliche Änderungen nötig sind. Vorzugsweise sind Anfasungen 21 im Übergangsbereich zwischen dem ersten und dem zweiten Eingriffsabschnitt 24, 25 vorgesehen, um das Zurückverlagern des Abstandselements 2 von der zweiten Stellung II in die erste Stellung I zu erleichtern.

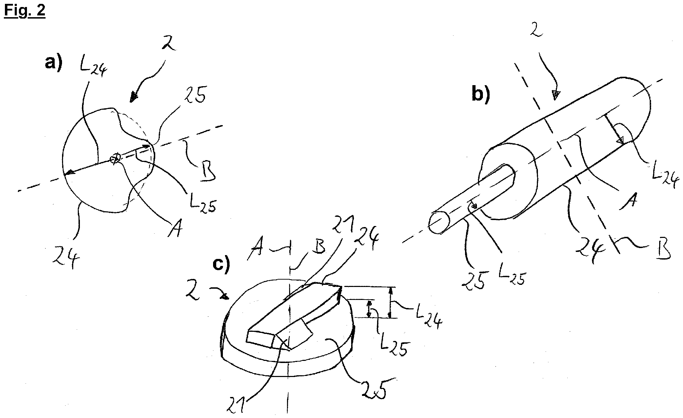

Fig. 2a zeigt eine bevorzugte Ausführungsform des erfindungsgemäßen Abstandselements 2, bei welcher dieses bolzenförmig ausgebildet ist und einen ersten Eingriffsabschnitt 24 aufweist, der eine größere Erstreckung längs oder parallel zu der Betätigungsachse B aufweist als ein zweiter Eingriffsabschnitt 25. Bei der im vorliegenden Beispiel gezeigten im Wesentlichen zylindrischen Ausbildung sowohl des ersten Eingriffsabschnitts 24 als auch des zweiten Eingriffsabschnitts 25, ist diese Erstreckung L₂₄ und L₂₅ der Eingriffsabschnitte 24, 25 im Wesentlichen deren Radius bzw. der Radius der zylinderförmigen Mantelfläche. Um von der ersten Stellung I in die zweite Stellung II gebracht zu werden, wird das Abstandselement II vorzugsweise längs der dargestellten Stellachse A verlagert. Erfindungsgemäß steht die Stellachse A in dieser Ausführungsform orthogonal oder senkrecht zur Betätigungsachse B.

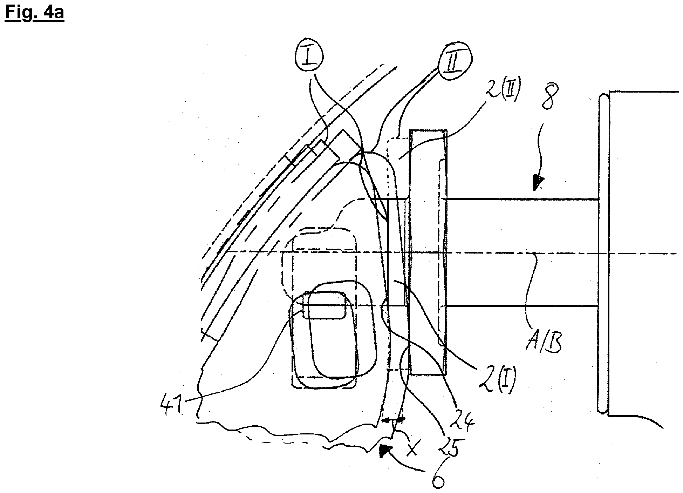

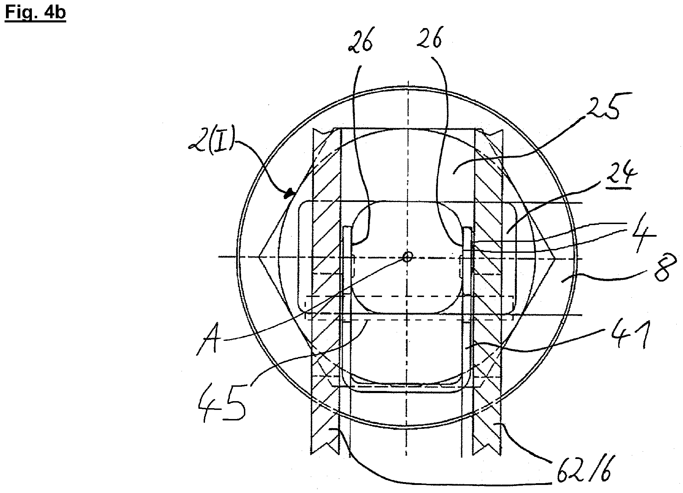

Fig. 2b zeigt eine Ausführungsform eines Abstandselements 2, bei welcher dieses einen scheibenförmigen Abschnitt aufweist, auf dem ein erster, im Wesentlichen rechteckförmiger erster Eingriffsabschnitt 24 ausgebildet ist. Im Bereich des ersten Eingriffsabschnitts 24 weist das Abstandselement 2 eine größere Erstreckung L₂₄ längs oder parallel zur Betätigungsachse B auf als im Bereich des zweiten Eingriffsabschnitts 25. Wie auch in Fig. 4a und b dargestellt, gelangt eine Backeneinheit 6 somit in der ersten Stellung des Abstandselements 2 vorzugsweise mit dem rechteckig ausbildeten ersten Eingriffsabschnitt 24 in Eingriff und in der zweiten Stellung II mit dem zweiten Eingriffsabschnitt 25. Es versteht sich, dass im vorliegenden Fall die Stellachse A, um welche das Abstandselement 2 verdreht wird, um von der ersten Stellung I in die zweite Stellung II gebracht zu werden, deckungsgleich oder parallel zur Betätigungsachse B ist, entlang derer die Stützeinheit 8 und die Backeneinheit 6 (beide nicht gezeigt) mehr oder weniger voneinander beabstandet werden.

Fig. 2c schließlich zeigt eine dritte bevorzugte Ausführungsform des erfindungsgemäßen Abstandselements 2, wobei dieses im Wesentlichen scheibenförmig ausgebildet ist und einen ersten Eingriffsabschnitt 24 aufweist, welche einer halben Zylinderfläche entspricht und einen zweiten Eingriffsabschnitt 25, welcher eine von der Zylinderform des ersten Eingriffsabschnitts 24 abweichende Außenfläche aufweist. Die mittlere Erstreckung L₂₄ des ersten Eingriffsabschnitts 24 ist dabei größer als die mittlere Erstreckung L₂₅ des zweiten Eingriffsabschnitts 25 längs oder parallel zur Betätigungsachse B. Im vorliegenden Fall ist das Abstandselement 2 derart zur Betätigungsachse B angeordnet, dass die Betätigungsachse B die entsprechenden Eingriffsabschnitte 24, 25 jeweils in der Fläche schneidet, in der im Einsatz des Abstandselements 2 in der ersten Stellung I und in der zweiten Stellung II die Backeneinheit 6 oder die Stützeinheit 8 zur Anlage gelangt. Der Unterschied, bzw. die Differenz der Erstreckungen L₂₅ und L₂₄ definiert somit die Änderung des Abstandes der Backeneinheit 6 von der Stützeinheit 8, wenn das Abstandselement 2 in die zweite Stellung II verlagert wird.

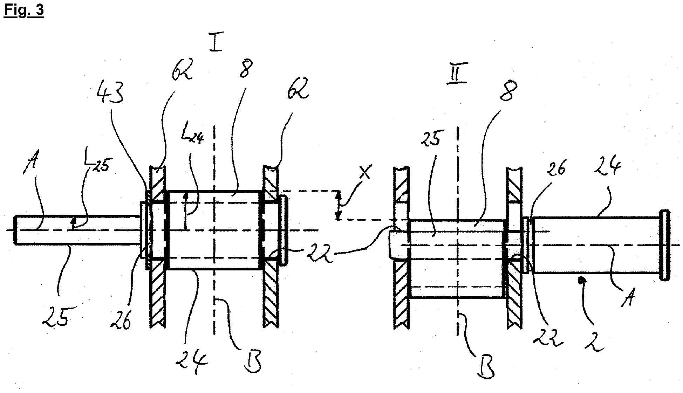

Fig. 3 zeigt eine weitere bevorzugte Ausführungsform der erfindungsgemäßen Stelleinheit, welche im Wesentlichen sehr stark der in Fig. 1 gezeigten Ausführungsform ähnelt. Weiterhin entspricht die in Fig. 3 gezeigte Ausführungsform im Wesentlichen der in Fig. 2a gezeigten Ausführungsform, wobei weitere Details erkennbar sind. Vorzugsweise weist die Backeneinheit 6 zwei Backenstege 62 auf, welche in der ersten Stellung I mit einem ersten Eingriffsabschnitt 24 des Abstandselements 2 in Eingriff stehen und in der zweiten Stellung (siehe rechts in der Figur) mit dem zweiten Eingriffsabschnitt 25 des Abstandselements 2. Die Stützeinheit 8 umfasst im vorliegenden Fall vorzugsweise eine Stützrolle, deren Innendurchmesser jeweils ebenfalls mit dem ersten Eingriffsabschnitt 24 oder mit dem zweiten Eingriffsabschnitt 25 in Eingriff gelangt. Auf diese Weise wird bei einem einfachen Unterschied der Erstreckungen L₂₄ und L₂₅ zueinander das Doppelte dieses Unterschiedes als Änderung des Abstandes x der Stützeinheit 8 zur Backeneinheit 6 relevant. Mit anderen Worten verlagert sich sowohl das Abstandselement 2 relativ zur Backeneinheit 6 um den jeweiligen Unterschied der Erstreckungen L₂₄ und L₂₅ und gleichzeitig verlagert sich auch das Rollenelement der Stützeinheit 8 relativ zum Abstandselement 2 um den Betrag der Differenz der Erstreckungen L₂₄ und L₂₅ In der Fig. 3 links gezeigten ersten Stellung I kann der zweite Eingriffsabschnitt 25, welcher in vorliegenden Fall aus der Stelleinheit herausragt, bevorzugt als Verschleißanzeiger verwendet werden, indem eine entsprechende Skalierung an dem Gehäuse der Bremseinheit vorgesehen wird und der zweite von den Bremsbacken hervorragende Abschnitt 25 als Zeiger verwendet wird. Weiterhin ist bevorzugt ein Klemmring 43 vorgesehen, welcher einen Sicherungsabschnitt 4 aufweist und im dritten Eingriffsabschnitt 26 eingreift, um das Abstandselement 2 in der ersten Stellung I zu sichern und eine Verlagerung des Abstandselements 2 längs der Stellachse A relativ zur Backeneinheit 6, im vorliegenden Fall zumindest relativ zu einem der Backenstege 62, zu verhindern.

Fig. 4a zeigt eine Ausführungsform einer nicht erfindungsgemäßen Stelleinheit 4, wobei in der Figur sowohl die erste Stellung I als auch die zweite Stellung II in überlagernder Weise dargestellt sind. Weiterhin ist zur Veranschaulichung in Fig. 4b eine Ansicht längs der Betätigungsachse B der in Fig. 4a gezeigten Ausführungsform dargestellt. Das Abstandselement 2 ist vorzugsweise integraler Bestandteil eines Betätigungskolbens der Stützeinheit 8, welche als Betätigungseinheit des Bremssystems ausgebildet ist. Weiterhin bevorzugt weist das Abstandselement 2 vorzugsweise einen ersten Eingriffsabschnitt 24 auf, der im Wesentlichen rechteckförmig ausgebildet ist. Wie in Fig. 4b gezeigt, ist das Abstandselement 2 in der ersten Stellung I durch ein Klammerelement 41 sicherbar, welches eine Verdrehung des Abstandselements 2 um die Stellachse A verhindert. Das Klammerelement 41 greift dabei an zumindest einem dritten Eingriffsabschnitt 26 des Abstandselements 2 ein. Die Sicherungsabschnitte 4 des Klammerelements 41 sichern somit durch Eingriff an den dritten Eingriffsabschnitten 26 und an den Innenseiten der Backenstege 62 das Abstandselement 2 in der ersten Stellung I gegen Verdrehung um die Stellachse A. Schematisch ist das Halteelement 45 dargestellt, welches das Klammerelement 41 gegen Verlagerung relativ zum Abstandselement 2 und/oder zur Backeneinheit 6 sichert. Nachdem das Halteelement 45 und danach das Klammerelement 41 entnommen wurde, kann ein Anwender das Abstandselement 2 um 90° um die Stellachse A drehen, wodurch sich der ersten Eingriffsabschnitt 24 zwischen die Backenstege 62 der Backeneinheit 6 schiebt und schließlich außer Eingriff mit den Backenstegen 62 gelangt. In diesem Zustand ist der in Fig. 4a dargestellte und mit II gekennzeichnete Fall erreicht, bei dem sich die Backeneinheit 6, insbesondere bevorzugt die Backenstege 62 direkt auf den zweiten Eingriffsabschnitt 25 abstützen, bzw. auf diesem aufliegen. Hierdurch entsteht an der linken Seite der Bremsbackeneinheit 6 ein Spiel zwischen den Bremsbelägen und der die Stelleinheit umgebenden Bremstrommel.

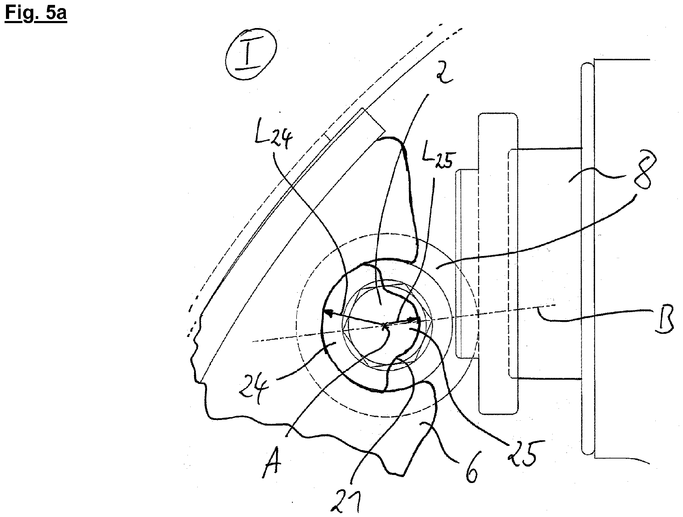

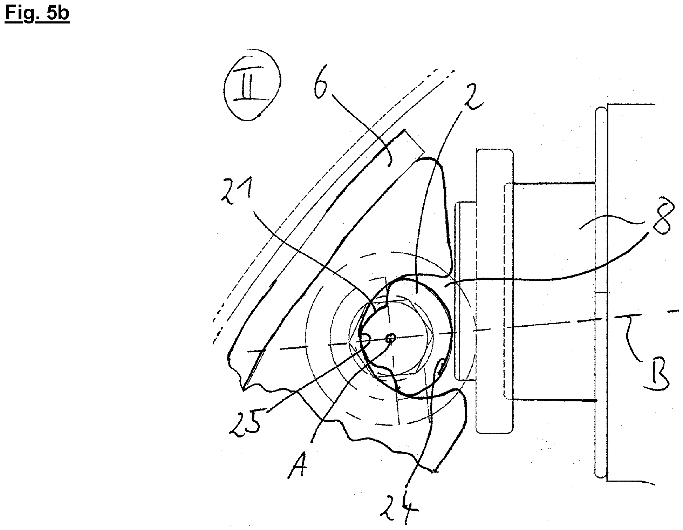

Fig. 5a und Fig.5b zeigen eine weitere, nicht erfindungsgemäße Ausführungsform einer Stelleinheit, bei der das Abstandselement 2 vorzugsweise wie in Fig. 2c ausgebildet ist. Das Abstandselement 2 stützt sich vorzugsweise in einem (nicht gezeigten) Halteabschnitt 22 an der Stützrolle der Stützeinheit 8 ab. In der in Fig. 5a gezeigten ersten Stellung greift das Abstandselement 2 dabei mit seinem ersten Eingriffsabschnitt 24 an der Backeneinheit 6 ein und beabstandet diese gegenüber der Stützeinheit 8, insbesondere gegenüber dem Betätigungskolben der Stützeinheit 8. In der in Fig. 5b gezeigten zweiten Stellung II wurde das Abstandselement um ca. 180° gedreht, wobei nun der zweite Eingriffsabschnitt 25 mit der Backeneinheit 6 in eingriff steht. Wie in Fig. 5a gekennzeichnet, weist der zweite Eingriffsabschnitt 25 eine kleinere Erstreckung L₂₅ längs der Betätigungsachse B auf als der erste Eingriffsabschnitt 24. Somit kann in der zweiten Stellung II die Backeneinheit 6 näher an die Stützeinheit 8 gelangen, wodurch ein Spiel oder Spalt zwischen der Backeneinheit 6 und der umgebenden Bremstrommel entsteht. In der in Fig. 5b dargestellten Stellung kann die Backeneinheit 6 leicht demontiert werden. Der gerundete Bereich zwischen dem ersten Eingriffsabschnitt 24 und dem zweiten Eingriffsabschnitt 25 ist als Anfasung 21 im Sinne der vorliegenden Erfindung geeignet, da er das Verdrehen des Abstandselements 2 um die Stellachse A erleichtert.

### Bezugszeichenliste:

- 2: - Abstandselement
- 21: - Anfasung
- 22: - Halteabschnitt
- 24: - erster Eingriffsabschnitt
- 25: - zweiter Eingriffsabschnitt
- 26: - dritter Eingriffsabschnitt
- 4: - Sicherungsabschnitt
- 41: - Klammerelement
- 43: - Klemmring
- 45: - Halteelement
- 6: - Backeneinheit
- 62: - Backensteg
- 8: - Stützeinheit
- 82: - Betätigungskolben
- A: - Stellachse
- B: - Betätigungsachse
- I: - erste Stellung
- II: - zweite Stellung
- x: - Änderung des Abstandes
- L₂₄: - mittlere Erstreckung des ersten Eingriffsabschnitts
- L₂₅: - mittlere Erstreckung des zweiten Eingriffsabschnitts

## Patentansprüche

1. Stelleinheit, umfassend ein Abstandselement (2), welches an einer Backeneinheit (6) oder an einer Stützeinheit (8) festlegbar ist,
wobei das Abstandselement (2) einen Halteabschnitt (22) aufweist, über welchen es gegen Verlagerung entlang einer Betätigungsachse (B) relativ zu der Backeneinheit (6) oder der Stützeinheit (8) sicherbar ist,
wobei das Abstandselement (2) einen ersten Eingriffsabschnitt (24) aufweist, welcher sich in einer ersten Stellung (I) des Abstandselements (2) an der jeweils anderen der Einheiten Backeneinheit (6) oder Stützeinheit (8) abstützt,
wobei das Abstandselement (2) in eine zweite Stellung (II) bringbar ist, in welcher der erste Eingriffsabschnitt (24) außer Eingriff mit der Backeneinheit (6) und der Stützeinheit (8) steht,
wobei sich ein zweiter Eingriffsabschnitt (25) des Abstandselements (2) in der zweiten Stellung (II) an der Backeneinheit (6) oder der Stützeinheit (8) abstützt,
wobei das Abstandselement (2) in der ersten Stellung (I) die Backeneinheit (6) und die Stützeinheit (8) weiter voneinander beabstandet als in der zweiten Stellung (II), **dadurch gekennzeichnet, dass**
das Abstandselement (2) durch Verlagerung längs einer Stellachse (A) von der ersten Stellung (I) in die zweite Stellung (II) und von der zweiten Stellung (II) in die erste Stellung (I) bringbar ist,
wobei die Stellachse (A) orthogonal zur Betätigungsachse (B) steht.

2. Stelleinheit nach einem der vorhergehenden Ansprüche,
wobei der erste Eingriffsabschnitt (24) eine größere mittlere Erstreckung (L₂₄) längs oder parallel der Betätigungsachse (B) aufweist als eine mittlere Erstreckung (L₂₅) des zweiten Eingriffsabschnitts (25) des Abstandselements (2) längs oder parallel zu der Betätigungsachse (B).

3. Stelleinheit nach einem der vorhergehenden Ansprüche,
wobei ein Verlagern des Abstandselements (2) von der ersten Stellung (I) in die zweite Stellung (II) eine Änderung des Abstandes (x) der Backeneinheit (6) von der Stützeinheit (8) längs der Betätigungsachse (B) bewirkt oder ermöglicht.

4. Stelleinheit nach einem der vorhergehenden Ansprüche,
wobei ein Sicherungsabschnitt (4) vorgesehen ist, der das Abstandselement (2) in der ersten Stellung (I) gegen Verdrehung um die Stellachse (A) und/oder gegen Verlagerung längs der Stellachse (A) relativ zur Stützeinheit (8) oder zur Backeneinheit (6) sichert.

5. Stelleinheit nach Anspruch 4,
wobei die Änderung des Abstandes (x) im Bereich von 1 mm bis 2 cm, vorzugsweise von 2 mm bis 1 cm, und besonders bevorzugt bei ca. 4 mm bis 6 mm liegt.

6. Stelleinheit nach einem der vorhergehenden Ansprüche,
wobei das Abstandselement (2) einen dritten Eingriffsabschnitt (26) aufweist, welcher mit dem Sicherungsabschnitt (4) in formschlüssigen Eingriff bringbar ist.

7. Stelleinheit nach einem der Ansprüche 4 bis 6,
wobei der Sicherungsabschnitt (4) an einem Klammerelement (41) ausgebildet ist,
welches in formschlüssigen Eingriff mit der Backeneinheit (6) gebracht, das Abstandselement (2) gegen Verdrehung um die Stellachse (A) sichert.

8. Stelleinheit nach einem der Ansprüche 4 bis 7,
wobei der Sicherungsabschnitt (4) an dem Abstandselement (2) festgelegt oder einstückig mit dem Abstandselement (2) ausgebildet ist und bezogen auf die Stellachse (A) eine von der Rotationsgeometrie abweichende Geometrie aufweist,
wobei der Sicherungsabschnitt (4) durch Verlagerung längs der Stellachse (A) in eine Position bringbar ist, in der er in einen korrespondierenden Abschnitt an der Backeneinheit (6) eingreift und das Abstandselement (2) gegen Verdrehung um die Stellachse (A) sichert.

9. Stelleinheit nach einem der Ansprüche 1 bis 8,
wobei die Stützeinheit (8) einen zylinder- oder tonnenförmig ausgebildeten Rollenkörper umfasst, welcher sich mit seiner Mantelfläche an einer Spreizkeileinheit der Stützeinheit (8) abstützt,
wobei das Abstandselement (2) bereichsweise bolzenförmig ausgebildet ist und in der ersten Stellung (I) mit seinem ersten Eingriffsabschnitt (24) und in der zweiten Stellung (II) mit seinem zweiten Eingriffsabschnitt (25) an der Backeneinheit (6) eingreift,
wobei sich der Halteabschnitt (22) des Abstandselements (2) in einer Aussparung der Stützeinheit (8) abstützt.

10. Verfahren zur Demontage eines Bremssystems, umfassend Schritte:
a) Lösen eines Sicherungsabschnitts (4) aus seinem Eingriff mit einem Abstandselement (2),
**gekennzeichnet durch**
b) Verlagern des Abstandselements (2) entlang einer Stellachse (A) derart, dass das Abstandselement (2) von einer ersten Stellung (I) in eine zweite Stellung (II) gelangt,
c) Ausnutzen des an einer Backeneinheit (6) entstandenen Spiels um die Backeneinheit (6) zu demontieren.

## Claims

1. An actuating unit,
comprising a spacer element (2) which can be fixed on a shoe unit (6) or on a supporting unit (8),
the spacer element (2) having a holding section (22), via which it can be secured against movement along an activating axis (B) relative to the shoe unit (6) or the supporting unit (8),
the spacer element (2) having a first engagement section (24) which is supported on the respective other one of the units comprising the shoe unit (6) or the supporting unit (8) in a first position (I) of the spacer element (2), it being possible for the spacer element (2) to be moved into a second position (II), in which the first engagement section (24) is out of engagement with the shoe unit (6) and the supporting unit (8),
a second engagement section (25) of the spacer element (2) being supported on the shoe unit (6) or the supporting unit (8) in the second position (II),
the spacer element (2) spacing the shoe unit (6) and the supporting unit (8) further apart from one another in the first position (I) than in the second position (II),
**characterized in that**
it being possible for the spacer element (2) to be moved from the first position (I) into the second position (II) and from the second position (II) into the first position (I) by way of movement along an actuating axis (A), the actuating axis (A) lying orthogonally with respect to the activating axis (B).

2. The actuating unit as claimed in one of the preceding claims, the first engagement section (24) having a greater mean extent (L₂₄) along or parallel to the activating axis (B) than a mean extent (L₂₅) of the second engagement section (25) of the spacer element (2) along or parallel to the activating axis (B).

3. The actuating unit as claimed in one of the preceding claims, a movement of the spacer element (2) from the first position (I) into the second position (II) bringing about or making possible a change in the spacing (x) of the shoe unit (6) from the supporting unit (8) along the activating axis (B).

4. The actuating unit as claimed in one of the preceding claims, a securing section (4) being provided which secures the spacer element (2) in the first position (I) against rotation about the actuating axis (A) and/or against movement along the actuating axis (A) relative to the supporting unit (8) or to the shoe unit (6).

5. The actuating unit as claimed in claim 4, the change in the spacing (x) lying in the range from 1 mm to 2 cm, preferably from 2 mm to 1 cm, and particularly preferably at from approximately 4 mm to 6 mm.

6. The actuating unit as claimed in one of the preceding claims, the spacer element (2) having a third engagement section (26) which can be brought into a positively locking engagement with the securing section (4).

7. The actuating unit as claimed in one of claims 4 to 6, the securing section (4) being configured on a clip element (41) which, having been brought into a positively locking engagement with the shoe unit (6), secures the spacer element (2) against rotation about the actuating axis (A).

8. The actuating unit as claimed in one of claims 4 to 7, the securing section (4) being fixed on the spacer element (2) or being configured in one piece with the spacer element (2), and having a geometry which differs from the rotational geometry in relation to the actuating axis (A), it being possible for the securing section (4) to be moved by way of movement along the actuating axis (A) into a position, in which it engages into a corresponding section on the shoe unit (6) and secures the spacer element (2) against rotation about the actuating axis (A).

9. The actuating unit as claimed in one of claims 1 to 8, the supporting unit (8) comprising a roller body of cylindrical or barrel-shaped configuration which is supported with its circumferential face on an expansion wedge unit of the supporting unit (8),
the spacer element (2) being of pin-shaped configuration in regions and engaging on the shoe unit (6) with its first engagement section (24) in the first position (I) and with its second engagement section (25) in the second position (II),
the holding section (22) of the spacer element (2) being supported in a cutout of the supporting unit (8).

10. A method for dismantling a brake system, comprising the steps:
a) releasing of a securing section (4) out of its engagement with a spacer element (2),
**characterized by**
b) moving of the spacer element (2) along an actuating axis (A) in such a way that the spacer element (2) passes from a first position (I) into a second position (II),
c) utilizing of the play which is produced on a shoe unit (6), in order to dismantle the shoe unit (6).

## Revendications

1. Unité de réglage comportant un élément écarteur (2) qui peut être immobilisé sur un ensemble de mâchoire (6) ou sur un ensemble de soutien (8),
dans laquelle
l'élément écarteur (2) comprend une portion de retenue (22) permettant de le bloquer à l'encontre d'un déplacement le long d'un axe d'actionnement (B) par rapport à l'ensemble de mâchoire (6) ou à l'ensemble de soutien (8),
l'élément écarteur (2) comprend une première portion d'engagement (24) qui prend appui contre l'autre ensemble respectif parmi l'ensemble de mâchoire (6) ou l'ensemble de soutien (8), dans une première position (I) de l'élément écarteur (2),
l'élément écarteur (2) peut être amené dans une seconde position (II) dans laquelle la première portion d'engagement (24) est dégagée de l'ensemble de mâchoire (6) et de l'ensemble de soutien (8),
une seconde portion d'engagement (25) de l'élément écarteur (2) prend appui contre l'ensemble de mâchoire (6) ou contre l'ensemble de soutien (8), dans la seconde position (II),
dans la première position (I), l'élément écarteur (2) écarte l'ensemble de mâchoire (6) et l'ensemble de soutien (8) plus loin l'un de l'autre que dans la seconde position (II),
**caractérisée en ce que**
l'élément écarteur (2) peut être amené depuis la première position (I) jusque dans la seconde position (II) et depuis la seconde position (II) jusque dans la première position (I), par déplacement le long d'un axe de réglage (A), et
l'axe de réglage (A) est orthogonal à l'axe d'actionnement (B).

2. Unité de réglage selon la revendication précédente,
dans laquelle
la première portion d'engagement (24) présente une extension moyenne (L₂₄) le long de ou parallèlement à l'axe d'actionnement (B), qui est plus grande qu'une extension moyenne (L₂₅) de la seconde portion d'engagement (25) de l'élément écarteur (2) le long de ou parallèlement à l'axe d'actionnement (B).

3. Unité de réglage selon l'une des revendications précédentes,
dans laquelle
un déplacement de l'élément écarteur (2) depuis la première position (I) jusque dans la seconde position (II) provoque ou permet un changement de la distance (x) de l'ensemble de mâchoire (6) par rapport à l'ensemble de soutien (8) le long de l'axe d'actionnement (B).

4. Unité de réglage selon l'une des revendications précédentes,
dans laquelle
il est prévu une portion de blocage (4) qui bloque l'élément écarteur (2) dans la première position (I) à l'encontre d'une rotation autour de l'axe de réglage (A) et/ou à l'encontre d'un déplacement le long de l'axe de réglage (A) par rapport à l'ensemble de soutien (8) ou à l'ensemble de mâchoire (6).

5. Unité de réglage selon la revendication 4,
dans laquelle
le changement de la distance (x) est dans la plage de 1 mm à 2 cm, de préférence de 2 mm à 1 cm, et de manière particulièrement préférée d'environ 4 mm à 6 mm.

6. Unité de réglage selon l'une des revendications précédentes,
dans laquelle
l'élément écarteur (2) comprend une troisième portion d'engagement (26) qui peut être amenée en engagement par coopération de forme avec la portion de blocage (4).

7. Unité de réglage selon l'une des revendications 4 à 6,
dans laquelle
la portion de blocage (4) est réalisée sur un élément formant pince (41) qui, en étant amené en engagement par coopération de forme avec l'ensemble de mâchoire (6), bloque l'élément écarteur (2) à l'encontre d'une rotation autour de l'axe de réglage (A).

8. Unité de réglage selon l'une des revendications 4 à 7,
dans laquelle
la portion de blocage (4) est immobilisée sur l'élément écarteur (2) ou est réalisée d'un seul tenant avec l'élément écarteur (2) et présente une géométrie qui diffère d'une géométrie de révolution par rapport à l'axe de réglage (A),
par déplacement le long de l'axe de réglage (A), la portion de blocage (4) peut être amenée dans une position dans laquelle elle vient s'engager dans une portion correspondante sur l'ensemble de mâchoire (6) et bloque l'élément écarteur (2) à l'encontre d'une rotation autour de l'axe de réglage (A).

9. Unité de réglage selon l'une des revendications 1 à 8,
dans laquelle
l'ensemble de soutien (8) présente un corps de rouleau réalisé en forme de cylindre ou de tonneau qui s'appuie par sa surface enveloppe contre un ensemble à cale d'écartement de l'ensemble de soutien (8),
l'élément écarteur (2) est réalisé localement en forme de boulon et s'engage sur l'ensemble de mâchoire (6) par sa première portion d'engagement (24) dans la première position (I) et par sa seconde portion d'engagement (25) dans la seconde position (II),
la portion de retenue (22) de l'élément écarteur (2) prend appui dans une échancrure de l'ensemble de soutien (8).

10. Procédé de démontage d'un système de frein, comprenant les étapes consistant à
a) dégager une portion de blocage (4) hors de son engagement avec un élément écarteur (2),
**caractérisé par** l'étape consistant à
b) déplacer l'élément écarteur (2) le long d'un axe de réglage (A) de telle sorte que l'élément écarteur (2) parvient d'une première position (I) jusque dans une seconde position (II),
c) profiter du jeu formé sur l'ensemble de mâchoire (6) pour démonter l'ensemble de mâchoire (6).
